## Europäisches Patentamt

## European Patent Office

## Office européen des brevets

(11) Veröffentlichungsnummer: **0 065 153**
A2

(12)

# EUROPÄISCHE PATENTANMELDUNG

(21) Anmeldenummer: **82103669.6**

(22) Anmeldetag: **29.04.82**

(51) Int. Cl.³: **H 01 S 3/10**

(30) Priorität: **18.05.81 DE 3119762**

(43) Veröffentlichungstag der Anmeldung: **24.11.82**
**Patentblatt 82/47**

(84) Benannte Vertragsstaaten: **DE FR GB IT NL SE**

(71) Anmelder: **ELTRO GmbH Gesellschaft für Strahlungstechnik, Kurpfalzring 106 Postfach 10 21 20, D-6900 Heidelberg 1 (DE)**

(72) Erfinder: **Karning, Heinrich, Albert-Fritz-Strasse 6, D-6900 Heidelberg-Kirchheim (DE)**

(74) Vertreter: **Muschka, Wilhelm, ELTRO GMBH GESELLSCHAFT FÜR STRAHLUNGSTECHNIK Kurpfalzring 106 Postfach 10 21 20, D-6900 Heidelberg 1 (DE)**

(54) Verfahren und Vorrichtung zum Betreiben eines Lasersystems mit Wellenlängenselektion.

(57) Das Verfahren und die Vorrichtung zum Regeln der Ausstrahlung eines Lasersystems bietet die Möglichkeit, mit einem innerhalb des Lasersenders 1 angeordneten wellenlängenselektierenden Element 4 die für den jeweiligen Verwendungszweck geeignetste Wellenlänge zu ermitteln; der zurückkommende Teil 6 dieser ausgesandten Strahlung 5 gelangt hierbei auf den Laserempfänger 8 des Systems und wird zur Einstellung des wellenlängenselektierenden Elements herangezogen.

0065153

Verfahren und Vorrichtung zum Betreiben
eines Lasersystems mit Wellenlängenselektion

Die Erfindung bezieht sich auf ein Verfahren zum Messen und Regeln
von Laserstrahlung mit Hilfe eines aus Sender und Empfänger bestehenden Lasersystems sowie auf eine Vorrichtung zur Durchführung
dieses Verfahrens.

Die spektrale Transmission bzw. die Streueigenschaft atmosphärischer Strecken, durch die Laserstrahlung zum Zweck von Meß- oder
Steuerzwecken - z.B. für Entfernungsmessung, Nachrichtenübertragung, Gasdetektion, Zielverfolgung und dgl. - übertragen werden
soll, ändert sich stark mit wechselnder Zusammensetzung der Luft,
der Feuchte (Niederschläge), der Temperatur, der Verschmutzungsanteile etc.

Es ist bekannt, mit einem Laser, insbesondere einem Flüssigkeits-
und einem Gaslaser, mehrere Wellenlängen gleichzeitig auszusenden
bzw. ein Wellenlängengemisch zu verwenden. Eine gewisse "Selektion"
wird dadurch erreicht, daß man meist eine relativ intensive Linie
anschwingen läßt und sie für Meßzwecke, z.B. zum Messen des
Wassergehalts oder der Konzentration von Fremdgasen in irgendwelchen Meßvolumina (Luft) ausnutzt. In der Regel findet hierfür
die sogenannte Differenzmethode Anwendung: Durch Wahl einer Wellenlänge geringer und einer solchen hoher Absorption kann durch
eine Vergleichsmessung die Konzentration von Beimischungen im
Meßpfad ermittelt werden. Es ist auch bekannt, mit einem Laser Luftverschmutzungen oder Feuchtigkeit spektral zu messen sowie die Verteilung in Raum und Zeit zu ermitteln. In anderen Anwendungsfällen, z.B. bei Laserentfernungsmessern, Zielbeleuchtern, Trackern (= Nachführeinrichtungen) oder Strahlleitsystemen ist eine große Reichweite der Strahlung erwünscht, d.h. die Strahlung muß hier wenig absorbiert und gestreut werden. Für verschiedene Wellenlängen, mit denen ein Laser strahlen kann, liegen sehr unterschiedliche Absorptionen bzw. Transmissionen vor. Ebenso schwanken die Eigenschaften verschiedener Ziele erheblich mit der Beschaffenheit ihrer Oberfläche, wobei ebenfalls die Unterschiede im Rückstrahlverhalten von der jeweiligen Wellenlänge abhängen. Diese Probleme untersuchen die Fachaufsätze "Molecular absorption of infrared laser radiation in the natural atmosphere" von P.L. Kelley, R.A. Mc Clatchey, R.K. Long u. A. Snelson in Optical and Quantum Electronics 8 (1976), 117-144, "Development of a pulsed 9,5 $\mu$m lidar for regional scale $O_3$ measurement" von Richard W. Stewart in OPTICAL ENGINEERING, July/August 1980 / Vol. 19 No. 4, 503-507 und "LONG-PATH INFRARED SPECTRA OF CO, $NO_2$, NO, $SO_2$ AND $N_2O$ OBSERVED IN A SIMULATED ATMOSPHERE IN TRACE AMOUNTS" von SHAU-YAU HO, 83-89, in Infrared Physics, 1973, Vol. 13.

Die Aufgabe der Erfindung wird in der Entwicklung einer Möglichkeit gesehen, bei einem gattungsgemäßen Verfahren für vorgegebene und sich von Einsatz zu Einsatz ändernde Verwendungszwecke die jeweils optimale Wellenlänge auswählen zu können. Diese Aufgabe wird erfindungsgemäß dadurch gelöst, daß der Wellenlängenbereich einer in dem Lasersender erzeugten Strahlung kontinuierlich oder stufenweise durchgestimmt wird und der zurückkommende Teil der ausgesandten Strahlung vom wellenlängenabstimmbaren Laserempfänger aufgefaßt, mit ihm eine Maximal/Minimalwertbestimmung unter Berücksichtigung der Eigenschaften der Übertragungsstrecke durchgeführt und anschließend bestimmte Wellenlängen mittels Regel- oder Stellgliedern eingestellt werden, und daß Sender und Empfänger auf gleiche oder auch verschiedene Wellenlängen schmal- oder breitbandig eingestellt werden.

Auf diese Weise läßt sich die Wellenlänge ein und desselben Gerätes rasch und ohne besonderen Aufwand dem jeweiligen Verwendungszweck anpassen. So läßt sich z.B. eine Wellenlänge maximaler Transmission, größter Absorption oder maximaler Remission durch Vordergrund oder Ziel einstellen. Senderseitig wird hierbei ein Gas-, Festkörper-, Halbleiter-, Flüssigkeits-, Freielektronen- oder FIR-Laser mit pulsförmig, kontinuierlich oder teils pulsförmig teils kontinuierlich erzeugter Strahlung verwendet, ferner können bedarfsweise mehrere unabhängig von einander arbeitende oder auch nach festem Programm verschiedene Wellenlängen erzeugende Sendeeinheiten verwendet werden, während die Empfängerseite im Direkt- oder im Heterodynempfang betrieben wird. Empfängerseitig ist außerdem vorgesehen, daß die aufgefaßte Strahlung über die Remission eines Ziels, über die Rückstreuung der Übertragungsstrecke oder über eine Eichstrecke am Sendeort gemessen und die Wellenlänge extremer Transmission ermittelt wird.

Eine Weiterbildung der Erfindung sieht vor, daß das Lasersystem auf mehreren Wellenlängen gleichzeitig - mit Wellenlängen gleicher oder unterschiedlicher Absorption oder Transmission - betrieben wird.

Vorteilhafte Merkmale sind ferner darin zu sehen, daß mit dem erfindungsgemäßen Verfahren die Transmission, die Absorption, die Sichtweite in einer Meßstrecke, die Luftfeuchte, die Schadstoffkonzentration, der Staub- und Aerosolgehalt - z.B. zum Zweck einer Freund/Fein-Kennung -, sowie eine Gaszusammensetzung ermittelt oder eine Übertragung von Nachrichten (Kommunikation), eine wellenlängenoptimierte Entfernungs-, Geschwindigkeits-, Wind- oder Temperaturmessung durchgeführt wird.

In vorstehendem Zusammenhang kann es zweckmäßig sein, daß die Synchronisationsmaßnahmen von räumlich getrennt angeordnetem Sender und Empfänger per Funk oder im optischen Nachrichtenkanal selbst durchgeführt werden. Es kann außerdem bedeutsam sein, daß sender- und/oder empfängerseitig eine oder mehrere Wellenlängen oder durch - z.B. den Raman-Effekt - verschobene Linien fest eingestellt werden oder aber eine Serie von Wellenlängen oder Linien
in bestimmter Reihenfolge geschaltet wird.

Was die zur Durchführung des erfindungsgemäßen Verfahrens vorgesehene Vorrichtung anbetrifft, so ist es vorteilhaft, wenn Lasersender und Laserempfänger zu einer baulichen Einheit zusammengefaßt oder auch räumlich getrennt - mit wenigstens einer Übertragungsstrecke - vorgesehen sind, in der optischen Achse des
Lasersenders ein wellenlängenselektierendes Element und zwischen
Laserempfänger und Lasersender - der Reihe nach - eine Einheit für
den Maximal/Minimal-Wert sowie eine Regel/Stell-Einheit geschaltet
sind. Zweckmäßigerweise kann dabei das wellenlängenselektierende
Element aus einem Gitter, einem Prisma, einem wellenlängenspezifischen schaltbaren Güteschalter, einer ramanaktiven Zelle, einer
piezogetriebenen Resonatorabstimmung, aus im Laser enthaltenen
Isotopen oder Isotopenmischungen bestehen.

Im folgenden werden an Hand einer Zeichnung Ausführungsbeispiele
der Erfindung näher erläutert, wobei die in den beiden Figuren
einander entsprechenden Teile dieselben Bezugszahlen aufweisen.
Es zeigt

Fig. 1    das Blockschaltbild der erfindungsgemäßen, in
          einem Gerät zusammengefaßten Vorrichtung und

Fig. 2    eine Variante der Vorrichtung gemäß Fig. 1 mit
          räumlich getrennt angeordneter Sende- und Empfangseinheit.

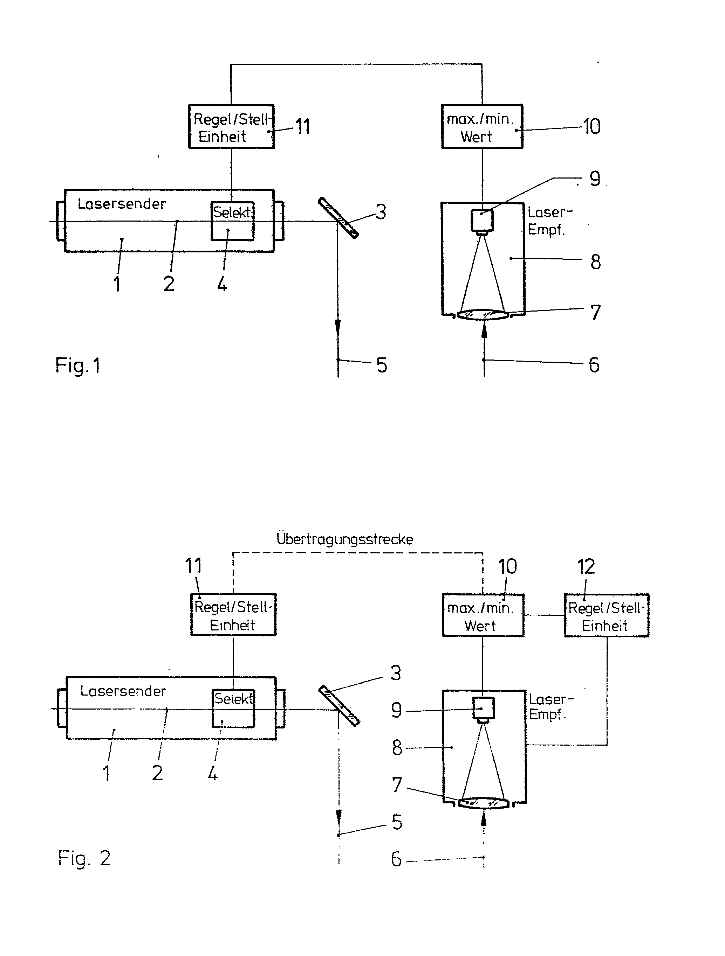

Im Lasersender 1 von Fig. 1, der ein Gas-, Festkörper-, Halb-
leiter-, Flüssigkeits-, Freielektronen-, oder Sekundärlaser, wie z.B. FIR-Laser (= far infrared laser) sein kann, wird
pulsförmige, kontinuierliche oder teils pulsförmige und teils
kontinuierliche Strahlung 2 erzeugt und über optische Mittel 3,
die z.B. aus einem Spiegel oder einem Prisma bestehen können,

0065153

in die gewünschte Richtung reflektiert. Innerhalb des Senders ist in der optischen Achse das wellenlängenselektierende Element 4 angeordnet - in der Praxis ein Gitter, Prisma, wellenlängenspezifischer Güteschalter oder eine piezogetriebene Resonatorabstimmung. Bei einem anderen, zeichnerisch nicht dargestellten Ausführungsbeispiel können senderseitig auch mehrere unabhängig voneinander arbeitende oder nach festem Programm verschiedene Wellenlängen oder.Linien erzeugende Sender verwendet werden. Dabei werden die Auswahlkriterien entsprechend der Meßaufgabe oder Kommunikationsanwendung vorprogrammiert. Dies Max./Min.-Kriterium der Fig. 1 und 2 umfaßt dabei nicht nur Werte maximaler und minimaler Transmission, sondern die der jeweiligen Meß- oder Kommunikationsaufgabe zugrunde liegende Logik. Auch kann der Wellenlängenabstimmbereich durch im Laser vorgesehene Isotopen oder Isotopenmischungen erweitert werden. Das Element 4 wird dabei um eine zur optischen Achse senkrechte Achse kontinuierlich oder stufenweise verschwenkt, so daß auf diese Weise das gesamte Wellenlängenband oder z.B. durch den Raman-Effekt, durch Brillouin-Streuung, durch nichtlineare optische Effekte verschobene bzw. verschiebbare Linien entsprechend durchgestimmt wird bzw. werden,bis eine für den vorgesehenen Verwendungszweck geeignete Wellenlänge bzw. Laserlinie (z.B. P- oder R- Linie) gefunden ist, die dann am - in Blickrichtung - rechten Ende des Lasersenders ausgekoppelt und in Pfeilrichtung 5 abgestrahlt wird.

Über die Remission von Vordergrund oder Ziel oder über die Rückstreuung eines Teils der ausgesandten Strahlung in der Übertragungsstrecke oder auch in einer Eichstrecke am Sendeort gelangt die durch den Pfeil 6 angedeutete Strahlung über das Eingangsobjektiv 7 in den Laserempfänger 8 bzw. auf dessen Detektor 9. Von letzterem wird die Strahlung synchron zum Sendevorgang empfangen und in der dem Laserempfänger nachgeschalteten Einheit 10 ihr Maximal/Minimal-Wert bestimmt. Dieser Wert wird der entsprechenden Wellenlänge zugeordnet, und zwar über die Regel- bzw. Stelleinrichtung 11, die zwischen die Einheit 10 und das wellenlängenselektierende Element 4 geschaltet ist. Lasersender 1 und Laserempfänger 8 sind hier zu einer baulichen Einheit zusammengefaßt. Es versteht sich, daß für den Fall der Verwendung mehrerer Sender, denselben auch mehrere Empfänger zugeordnet sein können.

Fig. 2 unterscheidet sich von der vorstehend beschriebenen Ausführungsform im wesentlichen durch die räumliche Trennung von Lasersender 1 und Laserempfänger 8, wobei dann lediglich eine funktionelle Verbindung gegeben ist. Letztere erfolgt durch Nachrichtenübertragung - z.B. optisch oder per Funk. In diesem Falle kann zwischen dem Laserempfänger 8 und der Einheit 10 noch das Regelstellglied 12 eingekoppelt werden, weil der Empfänger spektralabstimmbar ausgeführt sein kann. Bei einem anderen, nicht dargestellten Ausführungsbeispiel kann auch auf jeder Seite ein Sender 1 und ein Empfänger 8 vorgesehen sein, ohne daß dadurch der Rahmen der Erfindung verlassen würde. Auf diese Weise erhält man eine weitere, für die Antwort vorgesehene Übertragungsstrecke.

- 7 -

0065153

Patentansprüche

1. Verfahren zum Messen und Regeln von Laserstrahlung mit Hilfe eines aus Sender und Empfänger bestehenden Lasersystems, d a d u r c h   g e k e n n z e i c h n e t , daß der Wellenlängenbereich einer in dem Lasersender (1) erzeugten Strahlung (2) kontinuierlich oder stufenweise durchgestimmt wird, und der zurückkommende Teil (6) der ausgesandten Strahlung (5) vom wellenlängenabstimmbaren Laserempfänger (8) aufgefaßt, mit ihm eine Maximal/Minimalwertbestimmung (10) unter Berücksichtigung der Eigenschaften der Übertragungsstrecke durchgeführt und anschließend bestimmte Wellenlängen mittels Regel- oder Stellgliedern (11) eingestellt werden, und daß Sender und Empfänger auf gleiche oder auch verschiedene Wellenlängen schmal- oder breitbandig eingestellt werden.

2. Verfahren nach Anspruch 1, d a d u r c h   g e k e n n z e i c h - n e t , daß senderseitig ein Gas-, Festkörper-, Halbleiter-, Flüssigkeits-, Freielektronen- oder FJR-Laser (= far infrared laser) mit pulsförmig, kontinuierlich oder teils pulsförmig und teils kontinuierlich erzeugter Strahlung verwendet wird, daß senderseitig bedarfsweise mehrere unabhängig von einander arbeitende oder nach festem Programm verschiedene Wellenlängen erzeugende Sendeeinheiten verwendet werden, und daß die Empfängerseite im Direkt- oder im Heterodynempfang betrieben wird.

3. Verfahren nach Anspruch 1 und 2, d a d u r c h   g e k e n n - z e i c h n e t , daß die vom Laserempfänger (8) aufgefaßte Strahlung (6) über die Remission eines Ziels, über die Rückstreuung der Übertragungsstrecke oder über eine Eichstrecke am Sendeort gemessen und die Wellenlänge extremer Transmission ermittelt wird.

4. Verfahren nach einem der vorausgehenden Ansprüche, d a - d u r c h  g e k e n n z e i c h n e t , daß das Lasersystem (1, 8) auf mehreren Wellenlängen gleichzeitig - mit Wellenlängen gleicher oder unterschiedlicher Absorption oder Transmission - betrieben wird.

5. Verfahren nach einem der vorausgehenden Ansprüche, das d a d u r c h  g e k e n n z e i c h n e t  ist, daß mit ihm die Transmission, die Absorption, die Sichtweite in einer Meßstrecke, die Luftfeuchte, die Schadstoffkonzentration, der Staub- und  Aerosolgehalt - z.B. zum Zweck einer Freund/Feind-Kennung -, sowie eine Gaszusammensetzung ermittelt oder eine Übertragung von Nachrichten (Kommunikation), eine wellenlängenoptimierte Entfernungs-, Geschwindigkeits-, Wind- oder Temperaturmessung durchgeführt wird.

6. Verfahren nach einem der vorausgehenden Ansprüche, d a - d u r c h  g e k e n n z e i c h n e t , daß die Synchronisationsmaßnahmen von räumlich getrennt angeordnetem Sender (1) und Empfänger (8) per Funk oder im optischen Nachrichtenkanal selbst durchgeführt werden.

7. Verfahren nach einem der vorausgehenden Ansprüche, d a - d u r c h  g e k e n n z e i c h n e t , daß sender- und/ oder empfängerseitig eine oder mehrere Wellenlängen oder durch - z.B. den Raman-Effekt - verschobene Linien - fest eingestellt werden oder aber eine Serie von Wellenlängen oder Linien in bestimmter Reihenfolge geschaltet wird (Wellenlängencodierung).

8. Vorrichtung zur Durchführung des Verfahrens nach einem der vorausgehenden Ansprüche, d a d u r c h  g e k e n n - z e i c h n e t , daß Lasersender (1) und Laserempfänger (8) zu einer baulichen Einheit zusammengefaßt oder auch räumlich getrennt - mit wenigstens einer Übertragungsstrecke - vorgesehen sind, in der optischen Achse des Lasersenders ein wellenlängenselektierendes Element (4) und zwischen Laserempfänger (8) und Lasersender (1) - der Reihe nach - eine Einheit für den Maximal/Minimal-Wert (10) sowie eine Regel/Stell-Einheit (11) geschaltet sind.

9. Vorrichtung nach Anspruch 8, d a d u r c h   g e k e n n - z e i c h n e t , daß das wellenlängenselektierende Element (4) aus einem Gitter, einem Prisma, einem wellenlängenspezifischen schaltbaren Güteschalter, einer ramanaktiven Zelle oder einer piezogetriebenen Resonatorabstimmung besteht.

10. Vorrichtung nach Anspruch 8, d a d u r c h   g e k e n n - z e i c h n e t , daß der Laser verschiedene Isotope und Isotopenmischungen enthält.

Fig. 1

Fig. 2